# EUROPEAN PATENT APPLICATION

(11) **EP 4 387 262 A1**
(43) Date of publication of application: **19.06.2024**
(21) Application number: 22874900.8
(22) Date of filing: 27.09.2022
(51) Int. Cl.: H04Q 11/00

(54) **SERVICE DATA TRANSMISSION METHOD AND RELATED DEVICE**

(30) Priority: 30.09.2021 CN 202111166744
(71) Applicant: Huawei Technologies Co., Ltd., Shenzhen, Guangdong 518129 (CN)
(72) Inventor: LUO, Yong, Shenzhen, Guangdong 518129 (CN); YUAN, Guotao, Shenzhen, Guangdong 518129 (CN)
(74) Representative: Maiwald GmbH
(86) International application number: PCT/CN2022/121678
(87) International publication number: WO 2023/051515

(57) **Abstract**

Embodiments of this application disclose a service data transmission method, applied to the field of communication technologies. The method includes: A first wavelength division device receives service data; the first wavelength division device determines a service type corresponding to the service data; the first wavelength division device determines, based on the service type, a target optical service unit tunnel corresponding to a quality of service requirement of the service type; and the first wavelength division device uses the target optical service unit tunnel to carry the service data, and transmits the service data to a second wavelength division device through the target optical service unit tunnel. According to the method, quality of service of various types of service data can be ensured when a same bearer network is used to carry the service data. In this way, all types of service data are transmitted through one bearer network, thereby reducing network construction costs.

## Description

This application claims priority to Chinese Patent Application No. 202111166744.7, filed with the China National Intellectual Property Administration on September 30, 2021 and entitled "SERVICE DATA TRANSMISSION METHOD AND RELATED DEVICE", which is incorporated herein by reference in its entirety.

### TECHNICAL FIELD

This application relates to the field of communication technologies, and in particular, to a service data transmission method and a related device.

### BACKGROUND

A metropolitan area network (metropolitan area network, MAN) is a computer communication network established in a city, and is a broadband local area network. A main purpose of the metropolitan area network is to serve as a backbone network to interconnect hosts, databases, local area networks, and the like in different places in the city for transmission of service data. The metropolitan area network is a high-bandwidth, multi-functional, and multi-service access multimedia communication network based on an IP technology and an ATM telecommunications technology, uses an optical fiber as a transmission medium, and integrates data, voice, and video services.

With continuous development of information technologies, metropolitan area network services provided by operators have expanded from conventional voice and Internet access services to high-quality services oriented to individuals or home users, such as ultra-high-definition videos, cloud VR, and cloud games, and to high-quality private line services oriented to government and enterprise markets. Different service types have different requirements on the metropolitan area network. For example, a home broadband service requires network costs to be as low as possible, a premium private line service requires committed network bandwidth, and requires a network latency to be as low as possible and network reliability to be high, and a mobile bearer service requires assurance of flexible access of an IP-based base station, mobile edge computing MEC, and the like. Different services inevitably require different network architectures to carry service data.

Currently, each operator constructs a bearer network based on a large type of service to meet different network requirements of different services. To be specific, the home broadband service corresponds to a bearer network, the premium private line service corresponds to another bearer network, and the mobile bearer service corresponds to a third bearer network, and the like. As a quantity of service types continuously increases, if the operator continues to construct a network for each large type of service to support development of a new service, the operator faces huge pressure on network construction costs.

### SUMMARY

Embodiments of this application provide a service data transmission method and a related device, to ensure quality of service of various types of service data when a same bearer network is used to carry the service data. In this way, all types of service data are transmitted through one bearer network, thereby reducing network construction costs.

A first aspect of embodiments of this application provides a service data transmission method, including:
A wavelength division device is a device that transmits an optical signal by using a wavelength division multiplexing technology. The wavelength division multiplexing technology is a technology in which two or more optical carrier signals of different wavelengths are aggregated at a transmit end by using a multiplexer, and are coupled to a same optical fiber of an optical line for transmission. When transmitting service data, the wavelength division device needs to first determine a service type corresponding to the service data, and then selects a target optical service unit tunnel corresponding to a quality of service requirement of the service type. Then, the wavelength division device uses the selected target optical service unit tunnel to carry the service data, and transmits the service data through the target optical service unit tunnel.

In the foregoing method, when service data is transmitted, different types of service data are divided at an optical channel data unit ODUk layer. A service type of the service data is first identified, and then an optical service unit tunnel is selected based on a quality of service requirement of the service type. Then, the service data is transmitted through the target optical service unit tunnel. In this way, different transmission quality can be provided by simply establishing a plurality of different optical service unit tunnels in one bearer network. Service data of different service types is transmitted through different optical service unit tunnels, so that a quality of service requirement of the service data can be ensured. In this way, a same bearer network can be used to transmit different types of service data, thereby greatly reducing network construction costs.

In an optional implementation, when a first wavelength division device in a bearer network needs to transmit service data, the first wavelength division device needs to establish a plurality of optical service unit tunnels. Specifically, different optical service unit tunnels include different network nodes, and the optical service tunnels have different quality of service levels. For example, some optical service unit tunnels can ensure a relatively small latency, and some optical service unit tunnels can improve fixed bandwidth. After establishing the plurality of optical service unit tunnels, the first wavelength division device needs to establish a correspondence table between tunnel identifiers of the optical service unit tunnels and the quality of service levels, and stores the correspondence table. After receiving the service data, the first wavelength division device can search the correspondence table based on a quality of service requirement corresponding to a service type of the service data, to obtain a target optical service unit tunnel that matches the quality of service requirement. Finally, the first wavelength division device transmits the service data based on the target optical service unit tunnel.

In the foregoing method, before transmitting the service data, the first wavelength division device has established the plurality of optical service unit tunnels, and has established the correspondence table between the identifiers of the optical service unit tunnels and the quality of service levels. In this way, the first wavelength division device can directly obtain the target optical service unit tunnel based on the quality of service requirement corresponding to the service type, thereby reducing a transmission latency.

In an optional implementation, when receiving the service data, the first wavelength division device first needs to perform interface protocol conversion on a data packet corresponding to the service data; and then extracts a target packet field in the converted packet, and determines, based on content of the target packet field, the service type corresponding to the service data.

In an optional implementation, the first wavelength division device not only needs to determine the service type corresponding to the service data for identification, but also needs to determine whether data processing needs to be performed on the service data. Specifically, the data processing includes computing service processing, data center interconnect service processing, clock service processing, or the like. When the data processing needs to be performed on the service data, the first wavelength division device needs to process the service data, and then transmits the service data through the target optical service unit tunnel.

In an optional implementation, the optical service unit tunnel may be multiplexed. Therefore, when transmitting the to-be-sent service data to the target optical service unit tunnel, the first wavelength division device further needs to determine whether other to-be-sent service data further exists in a transmission queue corresponding to the target optical service unit tunnel. If other to-be-sent service data exists, the first wavelength division device needs to determine priorities of the plurality of pieces of to-be-sent service data in the transmission queue, and transmits the plurality of pieces of to-be-sent service data based on the priorities.

In an optional implementation, the first wavelength division device further needs to detect a data transmission status of the target optical service unit tunnel. When congestion occurs in the target optical service unit tunnel, the first wavelength division device needs to generate a congestion indication, and then adjusts a transmission sequence of the plurality of pieces of to-be-sent service data in the transmission queue based on the congestion indication. This ensures transmission quality and achieves lossless bearing.

In an optional implementation, when no to-be-sent service data exists in an optical service unit tunnel, the first wavelength division data can tear down the optical service unit tunnel to release a network resource. Specifically, the first wavelength division device may send transmission completion indication information to a second wavelength division device, where the indication information is used to notify the second wavelength division device that transmission of the service data is completed. In this case, the second wavelength division device may send feedback information to the first wavelength division device based on the indication information, and the first wavelength division device tears down the optical service unit tunnel when receiving the feedback information.

A second aspect of embodiments of this application provides a wavelength division device, including:
a receiving unit, configured to receive service data;
a determining unit, configured to determine a service type corresponding to the service data, where
the determining unit is further configured to determine, based on the service type, a target optical service unit tunnel corresponding to a quality of service requirement of the service type; and
a transmission unit, configured to: use the target optical service unit tunnel to carry the service data, and transmit the service data to a second wavelength division device through the target optical service unit tunnel.

In an optional implementation, the wavelength division device further includes an establishment unit.

The establishment unit is configured to: establish a plurality of optical service unit tunnels between the wavelength division device and the second wavelength division device, where different optical service unit tunnels correspond to different quality of service levels; and establish a correspondence table between tunnel identifiers of the plurality of optical service unit tunnels and the quality of service levels, and store the correspondence table.

The determining unit is specifically configured to determine the target optical service unit tunnel from the correspondence table based on the quality of service requirement of the service type.

In an optional implementation, the determining unit is specifically configured to: perform interface protocol conversion on a data packet corresponding to the service data; obtain a target packet field in the converted data packet; and determine, based on the target packet field, the service type corresponding to the service data.

In an optional implementation, the wavelength division device further includes a processing unit.

The processing unit is configured to perform data processing on the service data, where the data processing includes computing service processing, data center interconnect service processing, or clock service processing.

In an optional implementation, the transmission unit is specifically configured to: determine that other to-be-sent service data further exists in a transmission queue corresponding to the target optical service unit tunnel; and transmit the to-be-sent service data in the transmission queue based on a priority of the to-be-sent service data.

In an optional implementation, the determining unit is further configured to: monitor a data transmission status of the target optical service unit tunnel; and determine, by a first wavelength division device, a congestion indication when congestion occurs in the target optical service unit tunnel.

The processing unit is further configured to adjust a transmission sequence of the to-be-sent service data in the transmission queue based on the congestion indication.

In an optional implementation, the wavelength division device further includes a sending unit.

The sending unit is specifically configured to send transmission completion indication information to the second wavelength division device when no to-be-sent service data exists in the transmission queue, where the transmission completion indication information is used to notify the second wavelength division device that transmission of the service data is completed.

The receiving unit is further configured to receive feedback information sent by the second wavelength division device.

The processing unit is further configured to tear down the target optical service unit tunnel based on the feedback information.

A third aspect of embodiments of this application provides a wavelength division device, which may include a processor. The processor is coupled to a memory, and the memory stores program instructions. When the program instructions stored in the memory are executed by the processor, the service data transmission method according to the first aspect is implemented.

A fourth aspect of embodiments of this application provides a computer-readable storage medium. The computer-readable storage medium stores a computer program, and when the program is run on a computer, the computer is enabled to perform the service data transmission method according to the first aspect.

A fifth aspect of embodiments of this application provides a circuit system. The circuit system includes a processing circuit, and the processing circuit is configured to perform the service data transmission method according to the first aspect.

A sixth aspect of embodiments of this application provides a chip or a chip system. The chip or the chip system includes at least one processor and a communication interface. The communication interface and the at least one processor are interconnected through a line. The at least one processor runs instructions or a computer program. When included on a wavelength division device, the at least one processor can perform the service data transmission method according to the first aspect.

A seventh aspect of embodiments of this application provides a computer program product. The computer program product includes computer software instructions, and the computer software instructions may be loaded on a wavelength division device by using a processor to implement the procedure in the service data transmission method according to the first aspect.

In embodiments of this application, when service data is transmitted, different types of service data are divided at an optical channel data unit ODUk layer. A service type of the service data is first identified, and then an optical service unit tunnel is selected based on a quality of service requirement of the service type. Then, the service data is transmitted through the target optical service unit tunnel. In this way, different transmission quality can be provided by simply establishing a plurality of different optical service unit tunnels in one bearer network. Service data of different service types is transmitted through different optical service unit tunnels, so that a quality of service requirement of the service data can be ensured. In this way, a same bearer network can be used to transmit different types of service data, thereby greatly reducing network construction costs.

### BRIEF DESCRIPTION OF DRAWINGS

FIG. 1 is a schematic diagram of an interface corresponding to a metropolitan area network according to an embodiment of this application;
FIG. 2 is a diagram of a network structure of a metropolitan area network according to an embodiment of this application;
FIG. 3 is a schematic flowchart of a service data transmission method according to an embodiment of this application;
FIG. 4 is a schematic flowchart of another service data transmission method according to an embodiment of this application;
FIG. 5 is a schematic diagram of a structure of a wavelength division device according to an embodiment of this application; and
FIG. 6 is a schematic diagram of a structure of another wavelength division device according to an embodiment of this application.

### DESCRIPTION OF EMBODIMENTS

Embodiments of this application provide a service data transmission method and a related device, to ensure quality of service of various types of service data when a same bearer network is used to carry the service data. In this way, all types of service data are transmitted through one bearer network, thereby reducing network construction costs.

In the specification, claims, and accompanying drawings of this application, the terms "first", "second", and the like are intended to distinguish between similar objects but do not necessarily describe a specific order or sequence. It should be understood that the terms used in such a way are interchangeable in appropriate cases, and this is merely a discrimination manner for describing objects having a same attribute in embodiments of this application. In addition, the terms "include", "have" and any variant thereof are intended to cover non-exclusive inclusion, so that a process, method, system, product, or device that includes a series of units is not necessarily limited to those units, but may include other units that are not expressly listed or inherent to such a process, method, product, or device.

A metropolitan area network is a computer communication network established in a city, and is a broadband local area network. The metropolitan area network is a high-bandwidth, multi-functional, and multi-service access multimedia communication network based on an IP technology and an ATM telecommunications technology, uses an optical fiber as a transmission medium, and integrates data, voice, and video services. An important purpose of the metropolitan area network is to serve as a backbone network to interconnect hosts, databases, local area networks, and the like in different places in the city. Generally, the metropolitan area network may be divided into three layers: a core layer, an aggregation layer, and an access layer.

The core layer mainly improves service bearing and transmission of large bandwidth, and completes interconnection and communication with an existing network. The core layer is mainly characterized by broadband transmission and high-speed scheduling. A main function of the aggregation layer is to aggregate and distribute user service data for a service access node. The access layer uses a plurality of access technologies to allocate bandwidth and a service to implement user access. It may be learned from the foregoing description that, the metropolitan area network can carry and transmit data to transmit information between different hosts in a city.

With the continuous development of metropolitan area network services provided by an operator, the metropolitan area network services have expanded from conventional voice and Internet access services to high-quality services oriented to individuals/home users, such as ultrahigh-definition videos, cloud VR, and cloud games, and to high-quality private line services oriented to government and enterprise markets. Different service data has different transmission requirements and also has different requirements on network service quality. Currently, a metropolitan area network is a physical network, and includes a fixed forwarding device. Based on the fixed forwarding device, one network usually can forward only one type of service data, to meet a quality of service requirement of the type of service data.

For example, in a home broadband service scenario, service traffic is required to have a "high convergence ratio", a terminal needs to undergo validity authentication when accessing a network, and network construction costs are required to be as low as possible. In addition, data traffic on a home broadband service has no high requirement on network reliability and a network latency, and no guaranteed bandwidth needs to be provided for the home broadband service. Therefore, when a metropolitan area network is constructed for the home broadband service, a passive optical network device may be used at the access layer. The passive optical network device has features such as low energy consumption and easy deployment, thereby reducing network construction costs. Moreover, asymmetric bandwidth may be configured for an uplink and a downlink to meet a requirement of "downlink traffic is primary" in the home broadband service scenario. In addition, the aggregation layer and core layer each may use a native IP technology to implement best-effort forwarding of Internet access service traffic, statistical multiplexing of physical link bandwidth, and the like, to use a physical network to a maximum extent, thereby reducing network construction costs.

However, the foregoing metropolitan area network cannot adapt to a premium private line service scenario. This is because the premium private line service scenario has a very high requirement on service transmission, requires the metropolitan area network to provide committed network bandwidth and a committed millisecond-level ultra-low link latency and link latency jitter, and requires the metropolitan area network to provide highly reliable service data transmission, and the like. Currently, an operator re-establishes another physical network (metropolitan area network) for this type of service, and the network uses an "end-to-end wavelength division" technical solution, to be specific, optical carrier signals of different wavelengths at LO are allocated to different users. The users occupy optical carrier signals of different wavelengths to transmit data. If a link resource corresponding to a wavelength is allocated to a tenant, even if the tenant has no traffic for transmission, another user cannot rent the link resource. A latency of forwarding at the LO layer is "0". Therefore, in the metropolitan area network, an end-to-end link latency approximates a physical distance latency between a head node and a tail node. This can ensure that the end-to-end link latency is shortest. In addition, wavelengths are physically isolated in an optical fiber, so that reliability of information transmission can be improved, and guaranteed bandwidth can be further provided. However, the network has higher network construction costs, and are not applicable to the home broadband service scenario.

Similarly, the metropolitan area networks corresponding to the foregoing two scenarios are also not applicable to a mobile bearer service scenario. This scenario has the following main features: Flexible access of an IP-based base station and mobile edge computing MEC is required, a tunnel mechanism needs to ensure bandwidth of a single service flow, and network construction costs need to be low. Therefore, a mobile bearer service also has a corresponding physical network to implement a function required by the mobile bearer service.

It may be learned from the foregoing description that, currently, different service scenarios correspond to different physical networks. Each network has its own features to meet requirements of different services. However, if one physical network is established for one service type to support development of a new service, high network construction costs are caused and network resources are wasted.

For the foregoing problem, embodiments of this application provide a service data transmission method and a related device, so that not only a same physical network can be used to carry service data, but also quality of service of various types of service data can be ensured. Therefore, network construction costs are reduced and network resource utilization is improved. Specifically, optical carrier signals of different wavelengths at an L0 layer are used to transmit different service data, and then link resources are allocated, so that different tunnels transmit different service data. Before the transmission method provided in embodiments of this application is described, a wavelength division device is first briefly described.

The wavelength division device in embodiments of this application is an optical network device that transmits data by using a wavelength division multiplexing technology. The wavelength division multiplexing technology is a technology in which two or more optical carrier signals (which carry various types of information) of different wavelengths are aggregated at a transmit end by using a multiplexer, and are coupled to a same optical fiber of an optical line for transmission. At a receive end, optical carriers of various wavelengths are separated by using a demultiplexer, and then an optical receiver performs further processing to restore the original signals. The technology in which two or more optical signals of different wavelengths are transmitted in a same optical fiber is referred to as the wavelength division multiplexing technology.

The wavelength division multiplexing technology is essentially a frequency division multiplexing technology in terms of optical frequency. To make full use of huge bandwidth resources brought by a low-loss area of a single-mode optical fiber, a low-loss window of the optical fiber may be divided into several channels based on different frequencies (or wavelengths) of optical waves on channels. Then, the optical wave is used as a carrier of a signal. At the transmit end, a wavelength division multiplexer is used to combine optical carriers that are of signals and that have different specified wavelengths and send a combined optical carrier to an optical fiber for transmission. At the receive end, a wavelength division multiplexer separates the optical carriers that have different wavelengths and that carry different signals. Because optical carrier signals of different wavelengths may be considered as signals independent of each other, a plurality of optical signals may be implemented in one optical fiber through multiplexing. If signals in two directions are respectively arranged for transmission at different wavelengths, bidirectional transmission may be further implemented.

According to the foregoing description, embodiments of this application are intended to use a bearer technology to bear, in one physical network, all services including a home broadband service, a mobile bearer service, and a premium private line service. This reduces network construction and operation and maintenance costs of an operator while ensuring quality of various types of services. The following describes in detail a metropolitan area network provided in embodiments of this application.

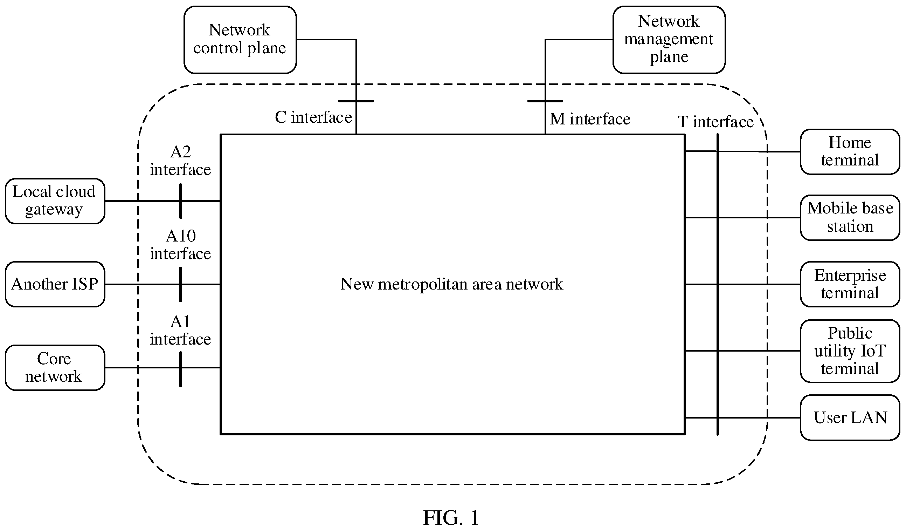

FIG. 1 is a schematic diagram of an interface corresponding to a metropolitan area network according to an embodiment of this application. As shown in FIG. 1, the metropolitan area network provides a plurality of types of network interfaces. A type of network interface is a T interface. The interface is located on a user side of the metropolitan area network, and is configured to connect to a user-side device. For example, the user-side device may include a home broadband user-side device, a mobile base station, an enterprise customer terminal device CPE, a public utility IoT terminal, and another user local area network. It may be understood that none of the devices connected to the interface belongs to a network operator. Therefore, the T interface is a responsibility division interface between an operator and a user. In addition, the T interface is not only a pure data interface, but also includes a control protocol between the operator and the user-side device.

Another type of network interface A is a network-side interface, and is configured to connect various devices of a network provider. For example, the network interface A includes an A2 interface connected to a local DC cloud gateway, an A10 interface connected to a third-party Internet service provider ISP, and an A1 interface connected to a core network of a current ISP. This is not specifically limited.

The metropolitan area network further provides a C interface connected to a network control plane and an M interface connected to a network management plane, which are configured to control and manage various protocols and network nodes in the network.

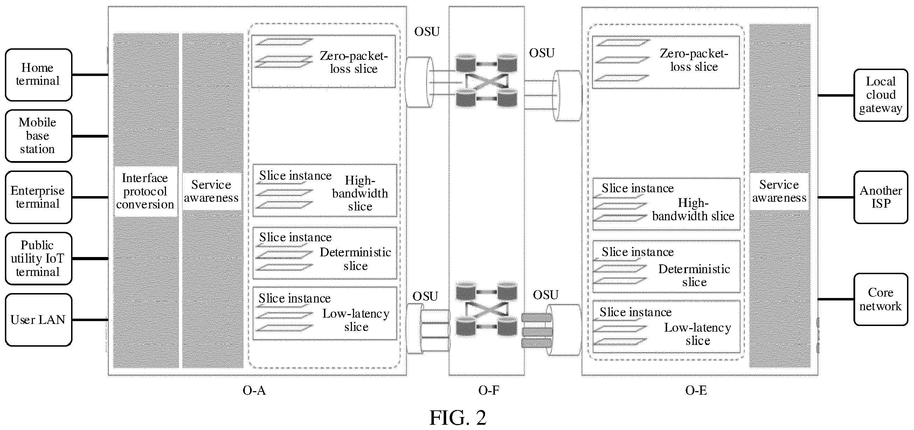

Based on the foregoing network interfaces corresponding to the metropolitan area network, FIG. 2 is a diagram of a network structure of a metropolitan area network according to an embodiment of this application. As shown in FIG. 2, the metropolitan area network includes three types of network devices, that is, three types of network nodes:

### First type of network node (O-A node):

This type of network node includes various types of access devices in the metropolitan area network, and is configured to connect to a gateway of a user network. To be specific, the O-A node is configured to connect to a user-side device, and connect the user-side device to the metropolitan area network. In addition, the node first receives service data packets from different user sides, first performs interface protocol conversion on the data packets, then perceives a service type of service data sent by a user, and selects, based on the service type, different optical service unit (optical service unit, OSU) tunnels to transmit the service data. Specifically, the node may be deployed at an access layer of the metropolitan area network, and is close to the user side.

The O-A node is specifically configured to manage and control a subnet, including: controlling tenant access, intelligently identifying a tenant, identifying a service type of a tenant, diverting a tenant to a bearer network, and the like.

### Second type of network node (O-E node):

This type of node is mainly configured to connect to a network-side device, including various devices provided by a network service provider that are used for network services, for example a cloud pool, a core network, and another Internet service provider. The node may also perceive a service type of transmitted service data. When the network service provider provides service data for a user, the O-E node also needs to select, based on service types of different service data, different optical service unit OSU tunnels to transmit the service data. Specifically, this type of node may be deployed at a core layer of the metropolitan area network, and is close to a cloud, a network service providing end, a core network end, or the like.

The O-E node is specifically configured to perform subnet slice management, including: slice mapping and demapping, slice scheduling, slice bandwidth adjustment, and the like.

### Third type of network node (O-F node):

This type of node includes several wavelength division devices (nodes), and transmits service data based on an optical service unit OSU tunnel to exchange traffic. Preferably, there is a bearer capability of direct optical layer transmission between two wavelength division nodes. The node may be deployed at an aggregation layer or the core layer of the metropolitan area network to carry and schedule service data.

The O-F node is specifically configured to manage and control a service, which specifically includes: intelligently identifying a tenant, identifying a service type of a tenant, diverting a tenant to a bearer network, managing a cloud service resource, and the like.

The O-A node and the O-F node may divide different types of service data to form a plurality of network slices, for example, including a zero-packet-loss slice, a high-bandwidth slice, a deterministic slice, a low-latency slice, and the like. Service data belonging to the zero-packet-loss slice has a relatively high requirement on network reliability, and requires that a packet loss cannot occur in a service data transmission process. However, service data belonging to the high-bandwidth slice has a relatively high requirement on network bandwidth, and generally, guaranteed bandwidth needs to be provided for this type of service data. The deterministic slice requires data transmission to have performance of a low latency and high reliability. Service data of the low-latency slice has a specific requirement on a network transmission rate.

Based on the description of the foregoing three types of network nodes, FIG. 2 shows logical networking of a new metropolitan area network based on an OSU unified bearer technology. In the network, an OSU is the only tunnel bearer technology in which processing manners of a bearer frame of the OSU used when the OSU is the three types of network nodes may be controlled to implement differentiated processing on different service data. Finally, differentiated bearing of services with different quality is implemented in one physical network.

In FIG. 2, slice instances on the O-A node and the O-E node each essentially identify a service type of service traffic by using a service awareness function module on the node, allocate a specific node resource and specific link resource to service data based on a quality of service requirement corresponding to the service type, and after quality of service level scheduling, encapsulate the service data into an OSU tunnel whose quality of service level matches the quality of service requirement, and uniformly carries the service data on the O-F node.

To enable service data with different quality of service requirements to enter an OSU tunnel with a corresponding bearer capability, the O-A node needs to perform packet awareness on service data (that is, a T interface) from a user end, and the O-E node needs to perform packet awareness on service data (that is, an A1/A2/A10 interface) from a service providing end. An awareness rule may be statically configured by a network control plane, or may be delivered at any time after being dynamically generated based on big data by using a policy management unit of the network control plane. Both the O-A node and the O-E node are located at an ingress of each piece of network data. A service traffic awareness module is added to periodically monitor the network, and collect and feed back network performance data to the network control plane, so that the network control plane dynamically generates big data of an awareness policy. For example, the awareness module identifies, based on the awareness rule, a specific field in a data packet corresponding to service data, to obtain a service type corresponding to the service data; and then diverts the service data to a matched preconfigured OSU tunnel based on a quality of service requirement of the service type, uses the OSU tunnel to carry the service data, and transmits the service data through the OSU tunnel.

The following describes a service data transmission procedure of the entire metropolitan area network.

First, the O-A node is connected to a user-side device or a gateway of a user network. After introducing service data of a user, the O-A node may perform interface protocol conversion on a data packet corresponding to the service data. After the conversion, the O-A node obtains fields that can be used to parse a service type of the service data of the user, and transmits these fields to a service awareness module for identification and matching. The service awareness module identifies the service type of the service data based on a matching rule, and determines whether data processing needs to be further performed on a service flow. For service data on which the data processing does not needs to be performed, the service awareness module matches a target OSU tunnel at an OSU connection layer based on the field; and for service data on which the data processing needs to be performed, the service awareness module transmits the service data to a processing module to perform the data processing on the service data. For example, the data processing may include computing service processing, data center interconnect DCI service processing, clock service processing, and the like. This is not specifically limited. It may be understood that the processing module may add different data processing manners as required based on a service situation.

The OSU connection layer needs to determine an OSU tunnel (O-F tunnel) that matches a quality of service requirement corresponding to the service type of the service data. After the OF tunnel carrying the service data is determined, the service data may be uniformly divided into OSU cells of a same size, and then the OSU cells are transmitted in an O-F switching network. It may be understood that different OSU tunnels have different quality of service levels.

After the OSU cell carrying a service data arrives at the O-E node, the O-E node first restores the service data from the OSU cell form to an encapsulation form used when the service data enters the O-A node, then also performs service awareness processing on the service data, determines a quality of service level requirement in a service egress direction, and transmits the service data to a corresponding target network through different types of A interfaces based on the quality of service level requirement.

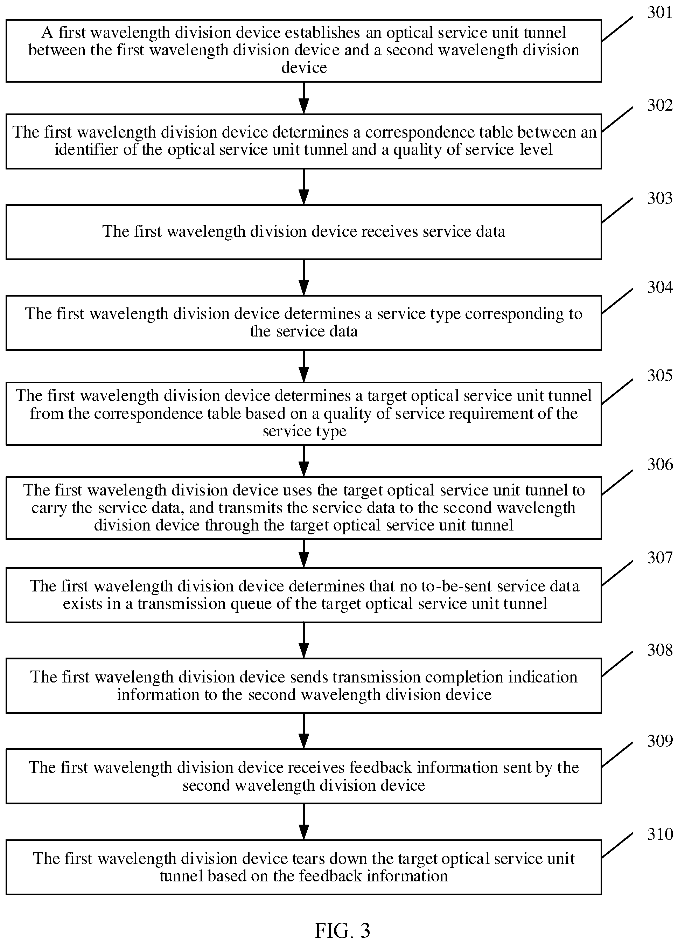

Based on the foregoing description of the metropolitan area network, the following describes a service processing method in detail for the O-A node or the O-E node. FIG. 3 is a schematic flowchart of a service data transmission method according to an embodiment of this application. As shown in FIG. 3, the method includes the following steps.

301: A first wavelength division device establishes an optical service unit tunnel between the first wavelength division device and a second wavelength division device.

It may be understood that the first wavelength division device may be the O-A node or the O-E node in the foregoing metropolitan area network. This is not specifically limited. Because the O-A node is configured to connect to a user side and the O-E node is configured to connect to a network side, both the O-A node and the O-E node can receive service traffic. A difference lies in that the O-A node introduces service traffic sent by user equipment and the O-E node introduces various network traffic provided by a network service provider. Therefore, when the first wavelength division device is a device on the O-A node, the second wavelength division device is a device on the O-E node; and similarly, when the second wavelength division device is a device on the O-E node, the second wavelength division device is a device on the O-A node. Both the O-A node and the O-E node have a capability of receiving service data, and transmit the service data to a bearer network corresponding to an O-F node. To be specific, in the foregoing two cases, only transmission directions of the service data are different, where one is uplink data sent by the user side to the network side, and the other is downlink data sent by the network side to the user side.

After a physical network is established and before service data is transmitted, the first wavelength division device needs to establish a plurality of optical service unit tunnels between the first wavelength division device and the second wavelength division device. Specifically, different optical service unit tunnels have different quality of service levels. The optical service unit tunnels correspond to different network slices, and links with different transmission quality are obtained for the network slices by dividing network resources. For example, the network slice may include a zero-packet-loss slice, a low-latency slice, a high-bandwidth slice, a deterministic slice, or the like. It may be understood that all the network slices are named based on transmission performance. For example, the high-bandwidth slice means that a link including a network device in the slice can ensure large bandwidth, and therefore is suitable for transmitting a type of service data having a requirement of fixed bandwidth. However, the low-latency slice can ensure that service data transmission has a relatively small network latency, and therefore is suitable for a type of service data that has a requirement on a network latency, and the like.

The first wavelength division device needs to carry service data of different service types by using optical waves of different wavelengths. After establishing OSU tunnels of different quality of service levels, the first wavelength division device can divert, to different OSU tunnels, optical waves that have different wavelengths and that carry different service data, to divide service types at an L0 layer, thereby carrying different service data in one physical network.

302: The first wavelength division device determines a correspondence table between an identifier of the optical service unit tunnel and a quality of service levels.

After establishing the plurality of optical service unit tunnels, the first wavelength division device needs to establish a correspondence table between identifiers of the optical service unit tunnels and the quality of service levels, and store the correspondence table. In this way, when introducing service data, the first wavelength division device can directly match a target optical service unit tunnel from the correspondence table based on a quality of service requirement of the service data, instead of establishing a corresponding optical service unit tunnel after introducing the service data. In this way, a network latency can be greatly reduced, thereby precisely matching an optical service unit tunnel.

303: The first wavelength division device receives service data.

If the first wavelength division device is a device on the O-A node, the first wavelength division device receives service traffic sent by the user equipment. However, if the first wavelength division device is a device on the O-E node, the first wavelength division device receives various network traffic provided by the network service provider. This is not specifically limited.

304: The first wavelength division device determines a service type corresponding to the service data.

After introducing the service data, the first wavelength division device needs to identify, based on a service awareness module, the service type corresponding to the service data, to obtain a transmission requirement of the service data, that is, a quality of service requirement. In this way, the first wavelength division device can match, based on the quality of service requirement of the service data, an OSU tunnel that can meet the condition of the service data.

For example, if the first wavelength division device is a device on the O-A node, packet protocol conversion needs to be performed on a data packet corresponding to the received service data. This is because service data packets sent by different users are likely to have different packet formats. To match the users, packet protocol conversion needs to be performed on the service data packets. After the packet protocol conversion is performed, a target packet field in the packet is extracted. Then, the service type of the service data is determined based on content of the target packet field. The target packet field in the packet is used to indicate the service type of the service data, so that a step of determining the service type can be simplified.

305: The first wavelength division device determines a target optical service unit tunnel from the correspondence table based on the quality of service requirement of the service type.

When determining the service type of the service data, the first wavelength division device may determine the quality of service requirement of the service data based on the service type, and then search, based on the quality of service requirement, the correspondence table for an optical service unit tunnel that matches the quality of service requirement. For example, if the service type requires a metropolitan area network to provide sufficient bandwidth to transmit the service data, an OSU tunnel corresponding to a high-bandwidth network slice may be determined as the target optical service unit tunnel for carrying and transmitting the service data, to ensure a service transmission requirement of the service data.

306: The first wavelength division device uses the target optical service unit tunnel to carry the service data, and transmits the service data to the second wavelength division device through the target optical service unit tunnel.

For example, before the first wavelength division device uses the target optical service unit tunnel to carry the service data, the first wavelength division device further needs to determine whether data processing needs to be performed on the service data. If the data processing needs to be performed on the service data, the service data needs to be processed first, and then processed service data is introduced into the target optical service unit tunnel; or if the data processing does not need to be performed on the service data, the service data can be directly introduced into the target optical service unit tunnel. For example, the data processing may include computing service processing, data center interconnect service processing, clock service processing, or the like. This is not specifically limited.

Then, the first wavelength division device uses the target optical service unit tunnel to carry the service data, and then transmits the service data to the second wavelength division device through the tunnel. In an example implementation, the target optical service unit tunnel may be multiplexed, and the tunnel corresponds to a transmission queue. When the first wavelength division device transmits a plurality of pieces of service data of a same service type, the first wavelength division device transmits the service data to the transmission queue of the target optical service unit tunnel, and waits for the target optical service unit tunnel to send the service data. Therefore, the first wavelength division device may monitor a plurality of pieces of to-be-sent service data in the transmission queue of the target optical service unit tunnel, determine priorities of the plurality of pieces of to-be-sent service data, and sequentially send the service data in a priority sequence. Specifically, the first wavelength division device first sends service data with a high priority, and then sends service data with a low priority. In this way, a network latency of the service data with a high priority can be reduced, thereby improving transmission performance.

In an example implementation, the first wavelength division device may further monitor a data transmission status of the target optical service unit tunnel. This is because when tunnel multiplexing is performed on the target optical service unit tunnel, network congestion may be caused due to excessive to-be-sent service data. When network congestion occurs, the first wavelength division device may generate a congestion indication, and adjust data transmission based on the congestion indication. For example, the first wavelength division device may suspend introduction of user traffic or may adjust a transmission sequence of the to-be-sent service data in the transmission queue, to enable the target optical service unit tunnel to provide a lossless bearer service and avoid a packet loss.

307: The first wavelength division device determines that no to-be-sent service data exists in the transmission queue of the target optical service unit tunnel.

After transmitting the service data, the first wavelength division device may tear down the target optical service unit tunnel based on a specific situation. It may be understood that whether the target optical service unit is to be torn down is related to a service type. Some service data requires fixed bandwidth, to be specific, once link bandwidth is allocated to this type of tenant, even if the tenant has no traffic, another tenant cannot occupy a link resource of the tenant. Therefore, even if there is no service data to be transmitted in an optical service unit tunnel corresponding to this type of tenant, the optical service unit tunnel cannot be torn down. However, some service data has no such a requirement. Therefore, after the service data is transmitted, the target optical service unit tunnel can be torn down to release a network resource.

308: The first wavelength division device sends transmission completion indication information to the second wavelength division device.

When determining to tear down the target optical service unit tunnel, the first wavelength division device needs to send the transmission completion indication information to the second wavelength division device, to notify the second wavelength division device that transmission of the service data is completed.

309: The first wavelength division device receives feedback information sent by the second wavelength division device.

After receiving the transmission completion indication information, the second wavelength division device needs to send the feedback information to the first wavelength division device.

310: The first wavelength division device tears down the target optical service unit tunnel based on the feedback information.

The first wavelength division device tears down the target optical service unit tunnel based on the received feedback information.

In the foregoing method, when service data is transmitted, different types of service data are divided at an optical channel data unit ODUk layer. A service type of the service data is first identified, and then an optical service unit tunnel is selected based on a quality of service requirement of the service type. Then, the service data is transmitted through the target optical service unit tunnel. In this way, different transmission quality can be provided by simply establishing a plurality of different optical service unit tunnels in one bearer network. Service data of different service types is transmitted through different optical service unit tunnels, so that a quality of service requirement of the service data can be ensured. In this way, a same bearer network can be used to transmit different types of service data, thereby greatly reducing network construction costs.

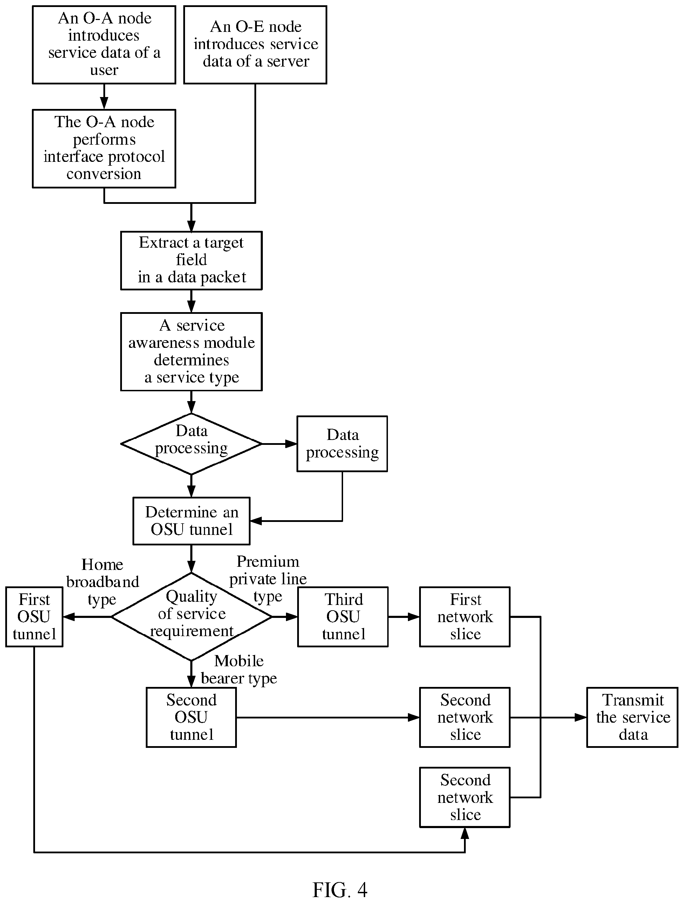

FIG. 4 is a schematic flowchart of another service data transmission method according to an embodiment of this application. As shown in FIG. 4, if an O-A node introduces service data of a user, the O-A node needs to perform interface protocol conversion on a data packet corresponding to the service data, and then extracts a target packet field in the data packet. If an O-E introduces service data of a server, the O-E point directly extracts a target packet field. Then, a service awareness module determines a service type based on the target packet field, and further determines whether to perform data processing on the service data. If the data processing needs to be performed on the traffic, the data processing is performed on the traffic, and then an OSU tunnel corresponding to the traffic is determined; or if the data processing does not need to be performed on the traffic, the OSU tunnel corresponding to the traffic is directly determined. Specifically, the OSU tunnel is determined based on a quality of service requirement corresponding to the service type. For example, the service type includes a premium private line type, a home broadband type, and a mobile bearer type. The types correspond to different OSU tunnels, and different OSU tunnels also correspond to different network slices. Then, different network slices are used to carry different types of service data, to transmit the service data to the other end of a metropolitan area network. For example, user traffic introduced into the O-A node needs to be transmitted to the O-E node, and user traffic introduced into the O-E node needs to be transmitted to the O-A node.

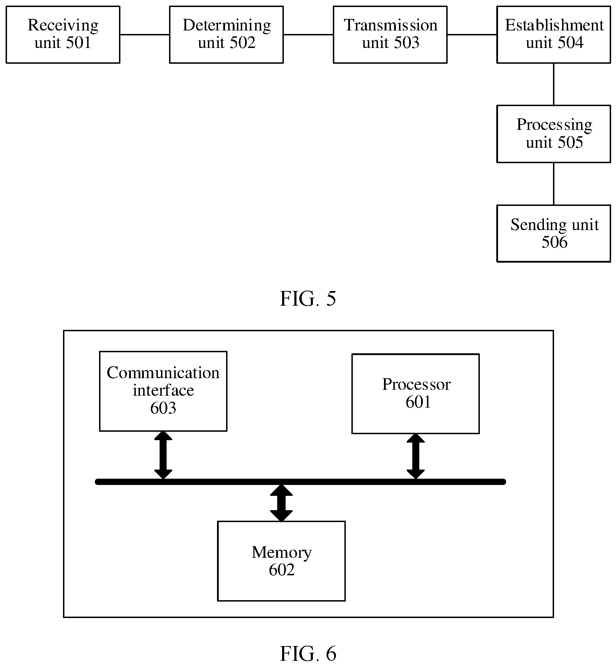

FIG. 5 is a schematic diagram of a structure of a wavelength division device according to an embodiment of this application. The wavelength division device includes:
a receiving unit 501, configured to receive service data;
a determining unit 502, configured to determine a service type corresponding to the service data, where
the determining unit 502 is further configured to determine, based on the service type, a target optical service unit tunnel corresponding to a quality of service requirement of the service type; and
a transmission unit 503, configured to: use the target optical service unit tunnel to carry the service data, and transmit the service data to a second wavelength division device through the target optical service unit tunnel.

In an optional implementation, the wavelength division device further includes an establishment unit 504.

The establishment unit 504 is configured to: establish a plurality of optical service unit tunnels between the wavelength division device and the second wavelength division device, where different optical service unit tunnels correspond to different quality of service levels; and establish a correspondence table between tunnel identifiers of the plurality of optical service unit tunnels and the quality of service levels, and store the correspondence table.

The determining unit 502 is specifically configured to determine the target optical service unit tunnel from the correspondence table based on the quality of service requirement of the service type.

In an optional implementation, the determining unit 502 is specifically configured to: perform interface protocol conversion on a data packet corresponding to the service data; obtain a target packet field in the converted data packet; and determine, based on the target packet field, the service type corresponding to the service data.

In an optional implementation, the wavelength division device further includes a processing unit 505.

The processing unit is configured to perform data processing on the service data, where the data processing includes computing service processing, data center interconnect service processing, or clock service processing.

In an optional implementation, the transmission unit 503 is specifically configured to: determine that other to-be-sent service data further exists in a transmission queue corresponding to the target optical service unit tunnel; and transmit the to-be-sent service data in the transmission queue based on a priority of the to-be-sent service data.

In an optional implementation, the determining unit 502 is further configured to: monitor a data transmission status of the target optical service unit tunnel; and determine, by a first wavelength division device, a congestion indication when congestion occurs in the target optical service unit tunnel.

The processing unit 505 is further configured to adjust a transmission sequence of the to-be-sent service data in the transmission queue based on the congestion indication.

In an optional implementation, the wavelength division device further includes a sending unit 506.

The sending unit 506 is specifically configured to send transmission completion indication information to the second wavelength division device when no to-be-sent service data exists in the transmission queue, where the transmission completion indication information is used to notify the second wavelength division device that transmission of the service data is completed.

The receiving unit 501 is further configured to receive feedback information sent by the second wavelength division device.

The processing unit 505 is further configured to tear down the target optical service unit tunnel based on the feedback information.

FIG. 6 is a schematic diagram of a structure of another wavelength division device according to an embodiment of this application. The wavelength division device includes a processor 601, a memory 602, and a communication interface 603.

The processor 601, the memory 602, and the communication interface 603 are mutually connected through a bus. The bus may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one thick line represents the bus in FIG. 6, but this does not mean that there is only one bus or only one type of bus.

The memory 602 may include a volatile memory (volatile memory), for example, a random-access memory (random-access memory, RAM). The memory may alternatively include a non-volatile memory (non-volatile memory), for example, a flash memory (flash memory), a hard disk drive (hard disk drive, HDD), or a solid-state drive (solid-state drive, SSD). The memory 602 may alternatively include a combination of the foregoing types of memories.

The processor 601 may be a central processing unit (central processing unit, CPU), a network processor (English: network processor, NP), or a combination of a CPU and an NP. The processor 601 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The communication interface 603 may be a wired communication interface, a wireless communication interface, or a combination thereof. The wired communication interface may be, for example, an Ethernet interface. The Ethernet interface may be an optical interface, an electrical interface, or a combination thereof. The wireless communication interface may be a WLAN interface, a cellular network communication interface, a combination thereof, or the like.

Optionally, the memory 602 may be further configured to store program instructions. The processor 601 invokes the program instructions stored in the memory 602, and may perform the steps in the method embodiment shown in FIG. 3 or FIG. 4 or the optional implementations in the method embodiment, so that the wavelength division device implements the functions of the wavelength division device in the foregoing method. Details are not described herein again.

An embodiment of this application further provides a chip or a chip system. The chip or the chip system includes at least one processor and a communication interface. The communication interface and the at least one processor are interconnected through a line. The at least one processor runs instructions or a computer program to perform one or more steps in the method embodiment shown in FIG. 3 or FIG. 4 or the optional implementations in the method embodiment to implement the functions of the wavelength division device in the foregoing method.

The communication interface in the chip may be an input/output interface, a pin, a circuit, or the like.

In a possible implementation, the chip or the chip system described above further includes at least one memory, and the at least one memory stores instructions. The memory may be a storage unit inside the chip, for example, a register or a cache, or may be a storage unit (for example, a read-only memory or a random access memory) of the chip.

An embodiment of this application further provides a computer storage medium. The computer storage medium stores computer program instructions for implementing the functions of the wavelength division device in the service data transmission method provided in embodiments of this application.

An embodiment of this application further provides a computer program product. The computer program product includes computer software instructions, and the computer software instructions may be loaded by using a processor to implement the procedure in the service data transmission method shown in FIG. 3 or FIG. 4.

All or some of the foregoing embodiments may be implemented by using software, hardware, firmware, or any combination thereof. When software is used for implementation, all or some of embodiments may be implemented in a form of a computer program product.

Based on the description of the foregoing implementations, a person skilled in the art may clearly understand that this application may be implemented by software plus necessary general hardware, or may be implemented by dedicated hardware, including a dedicated integrated circuit, a dedicated CPU, a dedicated memory, a dedicated component, and the like. Generally, any functions that are performed by a computer program can be easily implemented by using corresponding hardware. Moreover, a specific hardware structure used to achieve a same function may be in various forms, for example, in a form of an analog circuit, a digital circuit, or a dedicated circuit. However, in this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used for implementation, all or some of embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium, or may be transmitted from one computer-readable storage medium to another computer-readable storage medium. For example, the computer instructions may be transmitted from one website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

## Claims

1. A service data transmission method, wherein the method comprises:
receiving, by a first wavelength division device, service data;
determining, by the first wavelength division device, a service type corresponding to the service data;
determining, by the first wavelength division device based on the service type, a target optical service unit tunnel corresponding to a quality of service requirement of the service type; and
using, by the first wavelength division device, the target optical service unit tunnel to carry the service data, and transmitting the service data to a second wavelength division device through the target optical service unit tunnel.

2. The transmission method according to claim 1, wherein before the receiving, by a first wavelength division device, service data, the method further comprises:
establishing, by the first wavelength division device, a plurality of optical service unit tunnels between the first wavelength division device and the second wavelength division device, wherein different optical service unit tunnels correspond to different quality of service levels; and
establishing, by the first wavelength division device, a correspondence table between tunnel identifiers of the plurality of optical service unit tunnels and the quality of service levels, and storing the correspondence table; and
the determining, by the first wavelength division device based on the service type, a target optical service unit tunnel corresponding to a quality of service requirement of the service type comprises:
determining, by the first wavelength division device, the target optical service unit tunnel from the correspondence table based on the quality of service requirement of the service type.

3. The transmission method according to claim 1 or 2, wherein the determining, by the first wavelength division device, a service type corresponding to the service data comprises:
performing, by the first wavelength division device, interface protocol conversion on a data packet corresponding to the service data;
obtaining, by the first wavelength division device, a target packet field in the converted data packet; and
determining, by the first wavelength division device based on the target packet field, the service type corresponding to the service data.

4. The transmission method according to any one of claims 1 to 3, wherein before the using, by the first wavelength division device, the target optical service unit tunnel to carry the service data, the method further comprises:
performing, by the first wavelength division device, data processing on the service data, wherein
the data processing comprises computing service processing, data center interconnect service processing, or clock service processing.

5. The transmission method according to any one of claims 1 to 4, wherein the transmitting, by the first wavelength division device, the service data to a second wavelength division device through the optical service unit tunnel comprises:
determining, by the first wavelength division device, that other to-be-sent service data further exists in a transmission queue corresponding to the target optical service unit tunnel; and
transmitting, by the first wavelength division data, the to-be-sent service data in the transmission queue based on a priority of the to-be-sent service data.

6. The transmission method according to claim 5, wherein the method further comprises:
monitoring, by the first wavelength division device, a data transmission status of the target optical service unit tunnel;
determining, by the first wavelength division device, a congestion indication when congestion occurs in the target optical service unit tunnel; and
adjusting, by the first wavelength division device, a transmission sequence of the to-be-sent service data in the transmission queue based on the congestion indication.

7. The transmission method according to claim 5 or 6, wherein the method further comprises:
sending, by the first wavelength division device, transmission completion indication information to the second wavelength division device when no to-be-sent service data exists in the transmission queue, wherein the transmission completion indication information is used to notify the second wavelength division device that transmission of the service data is completed;
receiving, by the first wavelength division device, feedback information sent by the second wavelength division device; and
tearing down, by the first wavelength division device, the target optical service unit tunnel based on the feedback information.

8. A wavelength division device, wherein the wavelength division device comprises:
a receiving unit, configured to receive service data;
a determining unit, configured to determine a service type corresponding to the service data, wherein
the determining unit is further configured to determine, based on the service type, a target optical service unit tunnel corresponding to a quality of service requirement of the service type; and
a transmission unit, configured to: use the target optical service unit tunnel to carry the service data, and transmit the service data to a second wavelength division device through the target optical service unit tunnel.

9. The wavelength division device according to claim 8, wherein the wavelength division device further comprises an establishment unit;
the establishment unit is configured to: establish a plurality of optical service unit tunnels between the wavelength division device and the second wavelength division device, wherein different optical service unit tunnels correspond to different quality of service levels; and establish a correspondence table between tunnel identifiers of the plurality of optical service unit tunnels and the quality of service levels, and store the correspondence table; and
the determining unit is specifically configured to determine the target optical service unit tunnel from the correspondence table based on the quality of service requirement of the service type.

10. The wavelength division device according to claim 8 or 9, wherein the determining unit is specifically configured to: perform interface protocol conversion on a data packet corresponding to the service data; obtain a target packet field in the converted data packet; and determine, based on the target packet field, the service type corresponding to the service data.

11. The wavelength division device according to any one of claims 8 to 10, wherein the wavelength division device further comprises a processing unit; and
the processing unit is configured to perform data processing on the service data, wherein the data processing comprises computing service processing, data center interconnect service processing, or clock service processing.

12. The wavelength division device according to any one of claims 8 to 11, wherein the transmission unit is specifically configured to: determine that other to-be-sent service data further exists in a transmission queue corresponding to the target optical service unit tunnel; and transmit the to-be-sent service data in the transmission queue based on a priority of the to-be-sent service data.

13. The wavelength division device according to claim 12, wherein the determining unit is further configured to: monitor a data transmission status of the target optical service unit tunnel; and determine, by the first wavelength division device, a congestion indication when congestion occurs in the target optical service unit tunnel; and
the processing unit is further configured to adjust a transmission sequence of the to-be-sent service data in the transmission queue based on the congestion indication.

14. The wavelength division device according to claim 12 or 13, wherein the wavelength division device further comprises a sending unit;
the sending unit is specifically configured to send transmission completion indication information to the second wavelength division device when no to-be-sent service data exists in the transmission queue, wherein the transmission completion indication information is used to notify the second wavelength division device that transmission of the service data is completed;
the receiving unit is further configured to receive feedback information sent by the second wavelength division device; and
the processing unit is further configured to tear down the target optical service unit tunnel based on the feedback information.

15. A wavelength division device, comprising a processor and a memory, wherein the processor is coupled to the memory;
the memory is configured to store a program; and
the processor is configured to execute the program in the memory, so that the wavelength division device performs the method according to any one of claims 1 to 7.

16. A computer-readable storage medium, comprising a program, wherein when the program is run on a computer, the computer is enabled to perform the method according to any one of claims 1 to 7.
